# EUROPÄISCHE PATENTANMELDUNG

(11) **EP 2 108 872 A2**
(43) Veröffentlichungstag der Anmeldung: **14.10.2009**
(21) Anmeldenummer: 09157363.4
(22) Anmeldetag: 06.04.2009
(51) Int. Cl.: F16L 25/10, F16L 37/02

(54) **Rohreinheit und Verfahren zur Herstellung einer derartigen Rohreinheit**

(30) Priorität: 08.04.2008 DE 102008001046
(71) Anmelder: ZF Friedrichshafen AG, 88038 Friedrichshafen (DE)
(72) Erfinder: Rieß, Andreas, 97762 Hammelburg (DE)

(57) **Zusammenfassung**

Es wird eine Rohreinheit vorgestellt, die aus zwei abdichtend ineinander geschobenen Rohrenden (1, 3) besteht.
Erfindungsgemäß weist ein erstes Rohrende (1) wenigstens einen durch ein Umformverfahren hergestellten, wulstartigen Materialaufwurf (5) auf, auf den unter Bildung einer Dichtung das zweite Rohrende (3) aufgesetzt ist.

Ein erfindungsgemäßes Verfahren zur Herstellung einer derartigen Rohreinheit ist durch folgende Verfahrensschritte gekennzeichnet:
- Vorfertigung der miteinander zu verbindenden Rohrenden (1, 3),
- umformen eines ersten Rohrendes (1), sodass zumindest ein Materialaufwurf (5) gebildet wird,
- abdichtendes Aufsetzen des zweiten Rohrendes (3) auf den Materialaufwurf (5).

Letztlich wird eine Anwendungsmöglichkeit für eine erfindungsgemäße Rohreinheit angegeben, die in einem Schwingungsdämpfer mit einer Rohreinheit nach der Erfindung besteht und bei dem das erste Rohrende (1) Bestandteil des Innenrohres und das zweite Rohrende (3) Bestandteil des Außenrohres des Schwingungsdämpfers ist.

## Beschreibung

Die Erfindung betrifft eine Rohreinheit, ein Verfahren zur Herstellung einer derartigen Rohreinheit und einen mit einer Rohreinheit ausgestatteten Schwingungsdämpfer.

Aus der DE 92 06 568 U1 ist ein Schwingungsdämpfer mit einer Rohreinheit, bestehend aus einem Innenrohr und einem auf dieses aufgesetzten Außenrohr bekannt, wobei die Rohrenden dieser Rohreinheit abdichtend ineinander geschoben sind. Zur Abdichtung der ineinander geschobenen Rohrenden sind dabei Dichtelemente aus einem weichelastischen Werkstoff wie Gummi vorgesehen. Die Dichtelemente sind in Dichtungsaufnahmesicken eingesetzt, die sich im Bereich der miteinander kontaktierenden Rohrenden befinden. Nach dem Offenbarungsgehalt der DE 92 06 568 U1 werden die Dichtungsaufnahmesicken durch ein spanloses Umformverfahren in eines der Rohrenden eingebracht. Zur Erzeugung der Dichtungsaufnahmesicken ist eine hohe Maßgenauigkeit erforderlich, was den fertigungstechnischen Herstellungsaufwand der Rohreinheit insgesamt erhöht. Dennoch besteht ein wesentliches Problem dieser Lösung darin, dass beispielsweise in Folge gegebener Fertigungstoleranzen eine zuverlässige Abdichtung der Rohreinheit nach ihrer Montage nicht sicher prognostizierbar ist. Zum anderen kann nach der Montage der Rohreinheit ein Nachweis des Vorhandenseins der Dichtelemente an ihrem hierfür vorgesehenen Einbauort nicht mehr erbracht werden. Dieser Nachweis ist jedoch insbesondere von Bedeutung, wenn Qualitätsmanagementsysteme, wie FMEA-Analysen, derartige Nachweise fordern. Zudem konnte festgestellt werden, dass eine Prozessüberwachung während der Fertigung dieser Rohreinheiten nur schwer oder kaum realisierbar ist. Ein weiterer Nachteil besteht in der Gefahr, dass die in die Dichtungsaufnahmesicken eingesetzten Dichtelemente bei der Montage, also beim Übereinanderschieben der Rohrenden, beschädigt werden und aufgrund dieses Umstandes ihre Dichtwirkung nicht mehr vollständig entfalten.
Weiterhin ist zu befürchten, dass es infolge sich zwischen den Rohrenden einstellender Relativbewegungen oder auf Grund thermischer Einflüsse nachträglich zu Beschädigungen der Dichtelemente kommen kann.

Einfachere Lösungen der Verbindung von Rohrenden, um damit Rohreinheiten zu schaffen, bestehen darin, dass die Rohrenden stoffschlüssig miteinander verbunden, also zum Beispiel miteinander verschweißt werden. Derartige stoffschlüssige Verbindungen weisen jedoch den Nachteil auf, dass sie unlösbar sind.

Der Erfindung liegt die Aufgabe zugrunde, eine Rohreinheit bereitzustellen, die eine zuverlässige Abdichtung der ineinander geschobenen Rohrenden bei möglichst geringem Fertigungsaufwand und damit einhergehenden niedrigen Herstellungskosten ermöglicht. Ferner ist ein Verfahren zur Herstellung einer derartigen Rohreinheit und eine Verwendungsmöglichkeit für einen Schwingungsdämpfer anzugeben.

Die Erfindung löst diese Aufgabenstellung mit den Merkmalen der unabhängigen Patentansprüche.
Weitere Ausgestaltungen sind in den sich jeweils anschließenden Unteransprüchen wiedergegeben.

Eine Rohreinheit, die aus zwei abdichtend ineinander geschobenen Rohrenden besteht, wurde erfindungsgemäß dadurch weiterentwickelt, dass ein erstes Rohrende wenigstens einen durch ein Umformverfahren hergestellten, wulstartigen Materialaufwurf aufweist, auf den unter Bildung einer Dichtung das zweite Rohrende aufgesetzt ist.

Soweit im Zusammenhang mit der Erfindung von "Rohr" oder "Rohrende" gesprochen wird, ist dies nicht in einem engeren Sinne zu verstehen. Vielmehr kann ein Rohr jeden beliebigen geometrischen Querschnitt, also beispielsweise einen runden, einen ovalen, einen polygonalen oder einen frei geformten Querschnitt aufweisen. Die kreiszylindrische Geometrie stellt dabei lediglich eine Sonderform des Rohres dar. Ferner kann eines der beteiligten Rohrenden als massiver Körper ausgeführt sein, das heißt, es muss sich nur bei dem zweiten Rohrende um ein Rohrende mit einem Innenhohlraum handeln, sodass dieses auf den Materialaufwurf des ersten Rohrendes aufsetzbar ist.

Die erfindungsgemäße Rohreinheit stellt eine wesentliche fertigungstechnische Vereinfachung dar. Aufwändige Herstellungsverfahren, wie spanende Bearbeitungen, können vollständig entfallen. Statt dessen kommen einfache Umformteile zum Einsatz.

Darüber hinaus sind Dichtelemente zwischen den Rohrenden nicht mehr erforderlich und können vollständig entfallen. Damit sind auch die durch Beschädigungen der Dichtelemente hervorgerufenen Gefahren auszuschließen. Für die Abdichtung zwischen den Rohrenden wird nämlich das Material der Rohrenden selbst verwendet. Das Aufliegen eines der Rohrenden auf dem wulstartigen Materialaufwurf des anderen Rohrendes stellt dabei die Abdichtung der erfindungsgemäßen Rohreinheit dar. Hieraus ergibt sich als weiterer Vorteil, dass die Abdichtung der ineinander eingesetzten Rohrenden prozesssicher darstellbar ist.

Einsatzgebiete für die Erfindung sind ganz allgemein Bereiche, in denen Rohrenden dichtend miteinander verbunden werden müssen, wie beispielsweise auch die Heizungstechnik. Die erfindungsgemäße Lösung ist jedoch besonders vorteilhaft für eine Verwendung in Schwingungsdämpfern geeignet.

Selbstverständlich ist die Erfindung nicht auf metallische Werkstoffe beschränkt. Die Rohreinheit kann ebenso auf miteinander zu verbindende Rohrenden aus Kunststoffen, Verbundwerkstoffen oder anderen Materialien bezogen werden. Es ist auch nicht zwingend, gleiche Werkstoffe für die Rohrenden zu verwenden. Eine spezielle Ausgestaltung der Erfindung besteht darin, dass die Rohrenden jeweils aus metallischen Werkstoffen bestehen, wobei auch hierbei sowohl gleiche Metalle, als auch unterschiedliche metallische Werkstoffe als Kontaktpartner zur Anwendung kommen können. Zum Beispiel ist es möglich, ein Rohrende aus Aluminium und das korrespondierende andere Rohrende aus Stahl herzustellen. Metallische Werkstoffe haben den Vorteil, dass damit hohe Festigkeiten erreicht werden können und eine derartige Rohreinheit für spezielle Einsatzzwecke zur Verfügung steht, wie beispielsweise für Schwingungsdämpfer in Kraftfahrzeugen, die flüssigkeitsdicht ausgeführt sein müssen oder für Abgasanlagen in Kraftfahrzeugen mit den dort auftretenden hohen thermischen Belastungen.

Der an einem ersten Rohrende vorhandene, durch ein Umformverfahren hergestellte, wulstartige Materialaufwurf kann gemäß einer Weiterbildung der Erfindung sowohl an der Innenmantelfläche als auch an der Außenmantelfläche des ersten Rohrendes vorhanden sein. Der Umstand, dass das zweite Rohrende unter Bildung einer Dichtung auf den Materialaufwurf aufgesetzt ist, bedeutet in diesem Sinne, dass das korrespondierende zweite Rohrende auf der höchsten Erhebung der Umfangslinie des Materialaufwurfes aufliegt. Dies kann folgerichtig auch an der Innenmantelfläche des ersten Rohrendes der Fall sein, wenn der Materialaufwurf hier vorgesehen wird. In diesem Fall ragt die höchste Erhebung des Materialaufwurfes nach innen und das zweite Rohrende wird in das erste Rohrende eingeschoben. Hier liegt es im Sinne der Erfindung auf dem Materialaufwurf auf.
Mit diesen Möglichkeiten der Gestaltung einer erfindungsgemäßen Rohreinheit wird die Variantenvielfalt entscheidend erhöht.
Zudem liegen Ausführungen im Bereich des Erfindungsgedankens, die sowohl an ihrer Innenmantelfläche als auch an ihrer Außenmantelfläche jeweils einen Materialaufwurf aufweisen. Damit lassen sich nicht nur zwei, sondern beispielsweise drei Rohrenden ineinander fügen.

Um eine Abdichtung zwischen den Rohrenden zu erreichen, ist es von Vorteil, wenn die Verbindung zwischen dem ersten Rohrende und dem zweiten Rohrende eine Presspassung oder eine Übergangspassung ist. Mit diesen Passungen wird jeweils ein Festsitz des zweiten Rohrendes auf dem Materialaufwurf des ersten Rohrendes gewährleistet.

Eine alternative Verbindung der beiden Rohrenden unter Bildung einer erfindungsgemäßen Rohreinheit besteht darin, dass das zweite Rohrende unter Bildung einer plastischen Verformung auf den Materialaufwurf des ersten Rohrendes aufgesetzt ist. Dabei kann sowohl das Rohrende als auch der Materialaufwurf der genannten plastischen Verformung unterzogen werden. In jedem Fall wird damit eine Einheit der beiden Rohrenden geschaffen, die eine sehr zuverlässige Abdichtung ermöglicht.

Zur Verbesserung der axialen Fixierung der ineinander geschobenen Rohrenden wird ferner vorgeschlagen, dass das zweite Rohrende korrespondierend zu dem Materialaufwurf des ersten Rohrendes eine durch ein Umformverfahren hergestellte Nut aufweist. Die zu dem Materialaufwurf korrespondierende Nut wird nach der Verbindung der Rohrenden auf dem Materialaufwurf aufliegen und diesen damit zumindest teilweise aufnehmen. Die Nut bildet somit zumindest abschnittsweise eine Komplementärkontur zu dem Materialaufwurf. Damit entsteht eine sehr große Kontaktfläche zwischen den beiden Rohrenden, was wiederum eine Optimierung der Dichtungswirkung mit sich bringt.

Auch die zu dem Materialaufwurf korrespondierende Nut kann mittels eines Umformverfahrens in das Rohrende eingebracht werden. Als ein geeignetes Umformverfahren hat sich hierbei beispielsweise ein Rollverfahren erwiesen.

In besonderer Weise lässt sich die erfindungsgemäße Lösung dahingehend verbessern, dass, in Längsrichtung der Rohrenden betrachtet, mehrere Materialaufwürfe hintereinander vorhanden sind. Somit werden mehrere Kontaktflächen zwischen den ineinander geschobenen Rohrenden gebildet, die zur Verbesserung der Abdichtung und der Haltbarkeit der Verbindung der Rohrenden zur Verfügung stehen.

Eine Weiterführung dieses Erfindungsgedankens geht dahin, dass die Materialaufwürfe eine Labyrinthdichtung bilden.

Werden in Längsrichtung der Rohrenden betrachtet mehrere Materialaufwürfe hintereinander vorgesehen, lässt sich eine weitere Ausgestaltung der Erfindung realisieren, die darin besteht, dass diese Materialaufwürfe unterschiedliche Durchmesser aufweisen. Der Vorschlag ist deshalb von besonderer Bedeutung, weil sich hiermit ein gerichtetes Verbinden der Rohrenden realisieren lässt. Mit anderen Worten kann durch diese Lösung ein fehlerhafter Zusammenbau der Rohrenden bei der Herstellung der Rohreinheit vermieden werden.

Das erfindungsgemäße Verfahren zur Herstellung einer Rohreinheit weist zumindest folgende Verfahrensschritte auf:
- Vorfertigung der miteinander zu verbindenden Rohrenden,
- Umformen eines ersten Rohrendes, so dass zumindest ein Materialaufwurf gebildet wird,
- abdichtendes Aufsetzen des zweiten Rohrendes auf den Materialaufwurf.

Unter der genannten Vorfertigung der miteinander zu verbindenden Rohrenden ist zu verstehen, dass die Rohrenden in ihrer Geometrie derart ausgebildet werden, dass sie anschließend abdichtend zusammengefügt werden können.
Das Umformen des ersten Rohrendes unter Bildung eines Materialaufwurfes, kann beispielsweise dadurch erfolgen, dass ein Werkzeug an der Oberfläche des Rohrendes angesetzt wird und das Rohrende anschließend relativ zu dem Werkzeug eine Rotationsbewegung vollzieht. Durch das Ansetzen des Werkzeuges und den damit verbundenen Druck wird an der Mantelfläche des Rohrendes ein Materialaufwurf erzeugt. Verstärkt werden kann die Ausbildung des Materialaufwurfes noch durch eine Relativbewegung des Rollwerkzeuges zum Rohrende. Bevorzugt erfolgt diese Relativbewegung in Richtung der Längsachse des Rohres. Rollwerkzeug und Rohrende können jedoch ebenso in Bezug auf die Längsachse des Rohrendes radial aufeinander zu bewegt werden oder es ist eine kombinierte Relativbewegung aus axialer und radialer Richtung möglich, um den Materialaufwurf zu erzeugen.
Durch diese wenigen, einfachen Verfahrensschritte lässt sich eine erfindungsgemäße Rohreinheit bereitstellen, die zwei Rohrenden dichtend miteinander verbindet.

Die Verbindung der Rohrenden wird dabei bevorzugt als ein überwachter Fertigungsprozess durchgeführt, wobei es von Vorteil ist, während der Verbindung eine Kraft-Weg-Prüfung durchzuführen. Damit kann die Verbindung der Rohrenden mit gleich bleibender, konstanter Qualität erfolgen, ohne, dass eine Oberflächenzerstörung der miteinander zu verbindenden Rohrenden zu befürchten ist.

Eine besondere Ausgestaltung des erfindungsgemäßen Verfahrens besteht darin, dass zwei axial versetzt zueinander angeordnete Materialaufwürfe vorhanden sind, bei denen aufeinander folgend jeweils der Kraftanstieg beim Zusammenfügen der Rohrenden gemessen wird, bis ein vordefinierter Wert erreicht ist.

Neben den zuvor beschriebenen mechanischen Fügeverfahren der Rohrenden zur abdichtenden Verbindung, ist es darüber hinaus möglich, die Rohrenden unter Temperatureinflüssen zu fertigen und/oder zusammenzufügen. Unter dieser Temperierung versteht man im Sinne der Erfindung, dass beispielsweise die Rohrenden mittels eines Schrumpfungsprozesses zusammengefügt werden können. Dies bedeutet, dass eines der Rohrenden einem Kühlprozess und das andere Rohrende einer Temperaturerhöhung unterzogen werden, bevor die Rohrenden ineinander geschoben werden. Durch die Abkühlung zieht sich das Material zusammen, während die Temperaturerhöhung eine Ausdehnung des entsprechenden Rohrendes bewirkt. Die Teile lassen sich somit in einfacher Weise zusammenfügen und weisen bei Erreichung ihrer Normaltemperatur eine feste Verbindung miteinander auf, die gleichzeitig eine Dichtung bildet.
Mit diesem Verfahren lässt sich eine Verbindung der Rohrenden zu einer Rohreinheit bereitstellen, die ohne mechanische Beeinträchtigungen der miteinander kontaktierenden Oberflächen zwischen dem zweiten Rohrende und dem Materialaufwurf des ersten Rohrendes auskommt.

Methoden der Vorspannungsauslegung lassen sich für das erfindungsgemäße Ineinanderfügen der Rohrenden und das damit einher gehende Abdichten ebenfalls anwenden.

Sofern eine Temperierung der Rohrenden nicht vorgesehen wird, kann beim Fügen der Rohrenden alternativ dazu eine Materialverformung des Materialaufwurfes und/oder der Oberfläche des zweiten Rohrendes unter Berücksichtigung der Flächenpressung erfolgen, so dass die Flächenpressung nicht wesentlich überschritten wird. Dies bedeutet mit anderen Worten, dass eine Verbindung der Rohrenden erfolgt, ohne dass eine Zerstörung der Oberflächen eintritt. Die Rohrenden werden folglich mit einer vordefinierten Flächenpressung zusammen geschoben.

Von besonderem Vorteil für die optimale Durchführung des erfindungsgemäßen Verfahrens ist, dass beim Verbinden der Rohrenden ein Qualitätssicherungssystem im Sinne eines "Poka-Yoke-Systems" angewendet werden kann, soweit dies notwendig oder erwünscht ist. Unter einem "Poka-Yoke-System" wird eine Qualitätssicherung verstanden, die die Erkenntnis beinhaltet, dass kein Mensch und auch kein System in der Lage ist, unbeabsichtigte Fehler vollständig zu vermeiden. Durch das Poka-Yoke-System kann in einfacher und wirkungsvoller Weise dafür gesorgt werden, dass Fehlhandlungen in einem Fertigungsprozess nicht zu Fehlern am Endprodukt führen. Poka-Yoke zielt dabei auf den Einsatz technischer Hilfsmittel ab und stellt kostengünstige und sofort einführbare Methoden zur Verfügung. So weisen beispielsweise Gasanschlüsse ein Linksgewinde und Wasseranschlüsse ein Rechtsgewinde auf. Ein Vertauschen dieser Gewinde ist somit ausgeschlossen. Dieses Prinzip des Poka-Yoke-Systems kann für das erfindungsgemäße Verfahren des Fügens der Rohrenden eingesetzt werden, indem beispielsweise mehrere Materialaufwürfe vorhanden sind, die unterschiedliche Durchmesser aufweisen. Somit erfolgt immer ein gerichtetes Verbinden der Rohrenden, weil eine Montage in umgekehrter Richtung nicht möglich ist. Eine weitere Variante besteht darin, die geometrischen Querschnitte der Rohrenden derart zu gestalten, dass nur eine eindeutige und ausgerichtete Montage der Rohrenden erfolgen kann.

Mit dem Poka-Yoke-System können folglich im Fertigungsprozess unbeabsichtigte Fehler, die auf menschliche Fehlhandlungen zurückzuführen sind, von vornherein ausgeschlossen werden. Dieses System führt für das erfindungsgemäße Verfahren folglich zu einer Null-Fehler-Methode.

Ein Schwingungsdämpfer mit einer Rohreinheit, der nach einem der vorstehend genannten Lösungen montiert wird, ist **dadurch gekennzeichnet, dass** das erste Rohrende Bestandteil des Innenrohres und das zweite Rohrende Bestandteil des Außenrohres dieses Schwingungsdämpfers ist.

Bezüglich der Ausführung eines Schwingungsdämpfers mit einer erfindungsgemäßen Rohreinheit ist noch zu erwähnen, dass je nach Aufbau des Schwingungsdämpfers das Innenrohr auch gleichbedeutend mit einem Zwischenrohr des Schwingungsdämpfers verstanden werden kann. Ebenso kann es sich bei dem Außenrohr um das so genannte Zylinderrohr handeln, in weichem die Kolbenstange geführt ist. Maßgeblich für die Umsetzung der erfindungsgemäßen Lösung in einem Schwingungsdämpfer ist lediglich, dass hierbei zwei Rohrenden zu einer Roheinheit verbunden werden müssen und zwischen den Rohrenden eine Abdichtung erfolgen soll.

Insbesondere bei der Montage von Schwingungsdämpfern kommt das zuvor bereits erwähnte Poka-Yoke-System zu einer besonderen Bedeutung, da es sich bei Schwingungsdämpfern um Sicherheitsbauteile für Kraftfahrzeuge handelt. Hierbei wäre eine fehlerhafte Montage der ineinander zu fügenden Rohrenden sicherheitsrelevant und ist daher auszuschließen.

Zwei bevorzugte Ausführungsformen der Erfindung werden nachfolgend anhand der beigefügten Zeichnung näher erläutert. Die gezeigten Ausführungsbeispiele stellen keine Einschränkung auf die dargestellten Varianten dar, sondern dienen lediglich der Erläuterung des Prinzips der Erfindung. Dabei sind gleiche oder gleichartige Bauteile mit denselben Bezugszeichen benannt. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigen:
- Figur 1:: einen Stadienplan der Herstellung einer ersten Variante einer erfin- dungsgemäßen Rohreinheit und
- Figur 2:: eine schematisch vereinfachte Darstellung der Verbindung einer alterna- tiven Ausführung einer erfindungsgemäßen Rohreinheit.

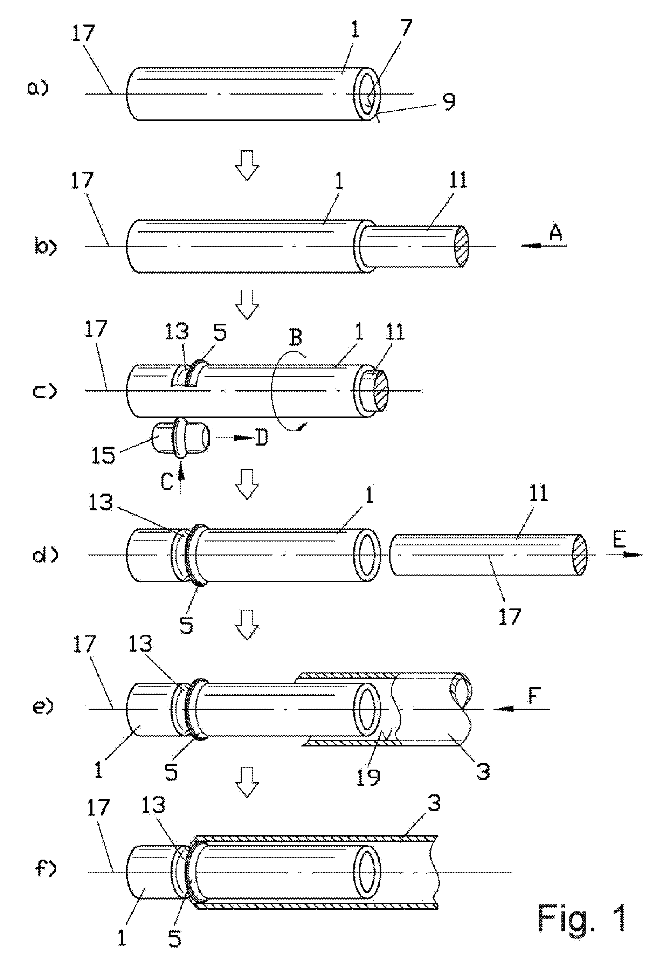

Die Figur 1 zeigt anhand eines Stadienplanes den Ablauf einer Herstellung einer erfindungsgemäßen Rohreinheit für ein spezielles Ausführungsbeispiel.

Die Figur 1 ist in insgesamt sechs verschiedene Stadien unterteilt. Diese sind mit den Buchstaben a bis f gekennzeichnet.
Betrachtet man nun zunächst die Darstellung a) in Figur 1, so ist hieraus die Vorfertigung eines ersten Rohrendes 1 zu entnehmen. Bei dem ersten Rohrende 1 handelt es sich im vorliegenden Beispiel um ein im Querschnitt kreiszylindrisches Rohr. Dieses ist hohl ausgebildet. Das erste Rohrende 1 weist eine Längsachse 17 auf und verfügt über eine Innenmantelfläche 7 sowie eine Außenmantelfläche 9.

Wie im Bildteil b) des Stadienplanes der Figur 1 ersichtlich ist, wird nach der Vorfertigung des ersten Rohrendes 1 in Richtung des Pfeils A ein Kern 11 aus einem Vollmaterial in das erste Rohrende 1 eingeführt. Der Kern 11 dient der Stabilisierung dieses ersten Rohrendes 1, so dass bei der weiteren Verarbeitung an der Innenmantelfläche 7 des ersten Rohrendes 1 keine unerwünschte Verformung entsteht.

Nachdem der Kern 11 vollständig in das erste Rohrende 1 eingeführt wurde, wird in Richtung des Pfeils C des Bildteiles c) ein Rollwerkzeug 15 an die Außenmantelfläche 9 des ersten Rohrendes 1 angesetzt. Im Anschluss daran erfolgt eine Relativbewegung zwischen Rollwerkzeug 15 und erstem Rohrende 1. Dabei wird das erste Rohrende 1 in eine Rotation in Richtung des Pfeils B versetzt, so dass das Rollwerkzeug 15 in die Außenmantelfläche 9 des ersten Rohrendes 1 einerseits eine Nut 13 einbringt und andererseits ein Materialaufwurf 5 entsteht, der neben der Nut 13 umlaufend verläuft. Zur verstärkten Ausbildung des Materialaufwurfes 5 kann darüber hinaus das Rollwerkzeug 15 überlagert zur Rotationsbewegung des ersten Rohrendes 1 in Richtung des Pfeils B in axialer Richtung, also in Richtung der Längsachse 17 des ersten Rohrendes 1 bewegt werden. In diesem Fall vollzieht das Rollwerkzeug 15 eine Bewegung in Richtung des Pfeils D im Bildteil c) der Figur 1.

Das somit fertig gestellte erste Rohrende 1 kann nunmehr von dem Kern 11 befreit werden, der in Richtung des Pfeils E und in Richtung der Längsachse 17 aus dem ersten Rohrende 1 herausgezogen wird. Wie im Bildteil d) der Figur 1 erkennbar ist, verbleibt an der Außenmantelfläche 9 des ersten Rohrendes 1 sowohl die Nut 13 als auch der Materialaufwurf 5.

In einem weiteren Fertigungsschritt, der im Bildteil e) in Figur 1 gezeigt ist, wird ein zweites Rohrende 3 in Richtung des Pfeils F und in Richtung der Längsachse 17 über das erste Rohrende 1 geschoben. Auch das zweite Rohrende 3 weist im vorliegenden Fall eine kreiszylindrische Geometrie auf. Das zweite Rohrende 3 wird so weit auf das erste Rohrende 1 aufgeschoben, bis die Innenmantelfläche 19 seiner Stirnseite mit dem Materialaufwurf 5 des ersten Rohrendes 1 in Kontakt tritt. Anschließend erfolgt nunmehr ein überwachter Fertigungsprozess zur Verbindung der beiden Rohrenden 1 und 3, in dem eine Kraft-Weg-Prüfung durchgeführt wird und das Aufschieben des zweiten Rohrendes 3 auf den Materialaufwurf 5 des ersten Rohrendes 1 unter Berücksichtigung der Flächenpressung derart erfolgt, dass die Flächenpressung nicht wesentlich überschritten wird.

Wie im Bildteil f) der Figur 1 zu erkennen ist, weisen das erste Rohrende 1 und das zweite Rohrende 3 der fertig montierten Rohreinheit nach der vorliegenden Erfindung eine feste, unlösbare Verbindung miteinander auf.

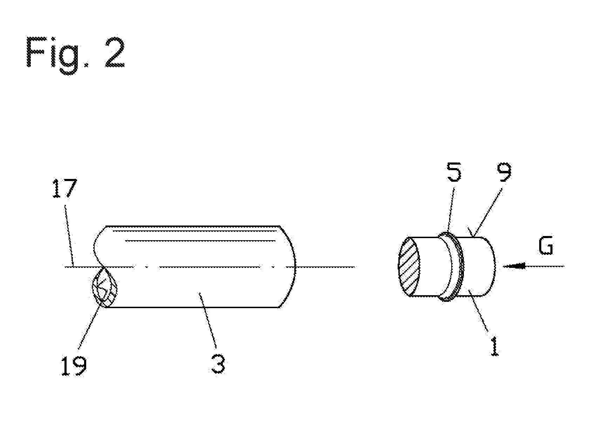

In der Figur 2 ist darüber hinaus eine andere Variante einer erfindungsgemäßen Rohreinheit gezeigt. Diese besteht aus einem ersten Rohrende 1, das vorliegend aus einem Vollmaterial gefertigt, also nicht hohl ausgebildet ist und einem zweiten Rohrende 3, das als im Querschnitt kreisförmiges Zylinderrohr ausgeführt wurde. An der Außenmantelfläche 9 des ersten Rohrendes ist ein Materialaufwurf 5 vorhanden, auf den durch ein Ineinanderschieben der beiden Rohrenden 1 und 3 in Richtung der Längsachse 17 beziehungsweise des Pfeils G die Innenmantelfläche 19 des zweiten Rohrendes 3 aufgesetzt wird, bis eine dichtende Verbindung zwischen den Rohrenden 1 und 3 geschaffen ist.

### Bezugszeichenliste

- 1: erstes Rohrende
- 3: zweites Rohrende
- 5: Materialaufwurf
- 7: Innenmantelfläche
- 9: Außenmantelfläche
- 11: Kern
- 13: Nut
- 15: Rollwerkzeug
- 17: Längsachse19 Innenmantelfläche

## Patentansprüche

1. Rohreinheit, bestehend aus zwei abdichtend ineinander geschobenen Rohrenden (1, 3),
**dadurch gekennzeichnet, dass**
ein erstes Rohrende (1) wenigstens einen durch ein Umformverfahren hergestellten, wulstartigen Materialaufwurf (5) aufweist, auf den unter Bildung einer Dichtung das zweite Rohrende (3) aufgesetzt ist.

2. Rohreinheit nach Anspruch 1,
**dadurch gekennzeichnet, dass**
die Rohrenden (1, 3) aus metallischen Werkstoffen bestehen.

3. Rohreinheit nach Anspruch 1 oder 2,
**dadurch gekennzeichnet, dass**
der Materialaufwurf (5) an der Innenmantelfläche (7) oder an der Außenmantelfläche (9) des ersten Rohrendes (1) vorhanden ist.

4. Rohreinheit nach einem der Ansprüche 1 bis 3,
**dadurch gekennzeichnet, dass**
die Verbindung zwischen dem ersten Rohrende (1) und dem zweiten Rohrende (3) eine Presspassung oder eine Übergangspassung ist.

5. Rohreinheit nach einem der Ansprüche 1 bis 3,
**dadurch gekennzeichnet, dass**
das zweite Rohrende (3) unter Bildung einer plastischen Verformung auf den Materialaufwurf (5) des ersten Rohrendes (1) aufgesetzt ist.

6. Rohreinheit nach Anspruch 5,
**dadurch gekennzeichnet, dass**
das zweite Rohrende (3) und/oder der Materialaufwurf (5) plastisch verformt ist beziehungsweise sind.

7. Rohreinheit nach einem der vorstehend genannten Ansprüche,
**dadurch gekennzeichnet, dass**
das zweite Rohrende (3) korrespondierend zu dem Materialaufwurf (5) des ersten Rohrendes (1) eine durch ein Umformverfahren hergestellte Nut aufweist.

8. Rohreinheit nach Anspruch 7,
**dadurch gekennzeichnet, dass**
die Nut durch ein Rollverfahren hergestellt ist.

9. Rohreinheit nach einem der vorstehend genannten Ansprüche,
**dadurch gekennzeichnet, dass**
in Längsrichtung der Rohrenden (1, 3) betrachtet, hintereinander mehrere Materialaufwürfe (5) vorhanden sind.

10. Rohreinheit nach Anspruch 9,
**dadurch gekennzeichnet, dass**
die Materialaufwürfe (5) eine Labyrinthdichtung bilden.

11. Rohreinheit nach Anspruch 9 oder 10,
**dadurch gekennzeichnet, dass**
die Materialaufwürfe (5) unterschiedliche Durchmesser aufweisen.

12. Verfahren zur Herstellung einer Rohreinheit nach einem der vorstehend genannten Ansprüche, **gekennzeichnet durch** mindestens folgende Verfahrensschritte:
- Vorfertigung der miteinander zu verbindenden Rohrenden (1, 3),
- umformen eines ersten Rohrendes (1), sodass zumindest ein Materialaufwurf (5) gebildet wird,
- abdichtendes Aufsetzen des zweiten Rohrendes (3) auf den Materialaufwurf (5).

13. Verfahren nach Anspruch 12,
**dadurch gekennzeichnet, dass**
die Verbindung zwischen den Rohrenden (1, 3) als überwachter Fertigungsprozess erfolgt, bei dem eine Kraft-Weg-Prüfung durchgeführt wird.

14. Verfahren nach Anspruch 13,
**dadurch gekennzeichnet, dass**
zwei axial versetzt zueinander angeordnete Materialaufwürfe (5) vorhanden sind, bei denen aufeinander folgend jeweils der Kraftanstieg beim Zusammenfügen der Rohrenden gemessen wird, bis ein vordefinierter Wert erreicht ist.

15. Verfahren nach einem der vorstehend genannten Ansprüche 12 bis 14,
**dadurch gekennzeichnet, dass**
die Rohrenden (1, 3) temperiert gefertigt und/oder zusammengefügt werden.

16. Verfahren nach einem der vorstehend genannten Ansprüche 12 bis 15,
**dadurch gekennzeichnet, dass**
beim Fügen der Rohrenden (1, 3) eine Materialverformung unter Berücksichtigung der Flächenpressung erfolgt, sodass die Flächenpressung nicht wesentlich überschritten wird.

17. Verfahren nach einem der vorstehend genannten Ansprüche 12 bis 16,
**dadurch gekennzeichnet, dass**
beim Fügen der Rohrenden (1, 3) die Rohrenden (1, 3) mittels eines Qualitätssicherungssystems im Sinne eines Poka-Yoke-Systems verbunden werden.

18. Schwingungsdämpfer mit einer Rohreinheit nach einem der vorstehend genannten Ansprüche,
**dadurch gekennzeichnet, dass**
das erste Rohrende (1) Bestandteil des Innenrohres und das zweite Rohrende (3) Bestandteil des Außenrohres des Schwingungsdämpfers ist.
